# EUROPEAN PATENT APPLICATION

(11) **EP 4 023 574 A1**
(43) Date of publication of application: **06.07.2022**
(21) Application number: 20857687.6
(22) Date of filing: 14.08.2020
(51) Int. Cl.: B65G 17/02, B65G 19/00, B23Q 11/00, B23Q 17/00

(54) **CONVEYING DEVICE**

(30) Priority: 29.08.2019 JP 2019157311
(71) Applicant: Tsubakimoto Mayfran, Inc., Koka-shi, Shiga 528-0235 (JP)
(72) Inventor: ENDO, Kenichi, Koka-shi, Shiga 528-0235 (JP); HORI, Ryuichi, Koka-shi, Shiga 528-0235 (JP)
(74) Representative: Patentanwaltskanzlei WILHELM & BECK
(86) International application number: PCT/JP2020/030884
(87) International publication number: WO 2021/039440

(57) **Abstract**

The present invention can downsize a configuration for compressing chips to prevent rolling of chips during elevation and adjust an amount of chips received by the configuration. A conveying device (100) includes: a hinge belt (21) including a receiving part (211) that receives chips, an inclined part (212) inclined with respect to the receiving part (211) and that elevates chips received by the receiving part (211), and a discharging part (213) that discharges elevated chips; and a compression mechanism (3) including a compression surface (311b) facing the hinge belt (21) in a boundary region (214) between the receiving part (211) and the inclined part (212) and an introduction end part (311c) that introduces chips to the compression surface (311b), and a distance between the introduction end part (311c) and the hinge belt (21) is variable so that chips between the compression surface (311b) and the hinge belt (21) are compressed.

## Description

### Technical Field

The present invention relates to a conveying device for conveying chips generated by machining.

### Background Art

In machining (e.g., cutting or polishing) of a workpiece, a conveyor is used to collect chips generated by the machining. Such a conveyor conveys chips by causing a conveyance belt to move from a position where chips are received to a height where the chips are dropped to a collection box. Certain types of chips may be prone to entanglement or clustering. In a case where chips become too large in such a manner, there arises an inconvenience that chips become difficult to collect.

In order to eliminate such an inconvenience, Patent Literature 1 discloses a compressing device that presses a compression panel with predetermined force toward a hinge plate which is included in a rotationally running member. The compression panel is configured so that a space between the compression panel and an upper surface of the hinge plate is gradually narrowed downstream in a carrying-out direction of chips.

Patent Literature 2 discloses a device that presses chips to a load conveyor by a pressing conveyor in an inclined part which is inclined to elevate chips on the load conveyor on which chips are loaded.

### Citation List

### [Patent Literature]

[Patent Literature 1]
   Japanese Patent Application Publication Tokukai No. 2015-24457
[Patent Literature 2]
   Japanese Patent No. 4334805

### Summary of Invention

### Technical Problem

In the conveyor, chips are held by cleats, which are provided on a conveyance belt at intervals, so as not to roll during conveyance. However, if chips become too large, the chips tend to roll beyond the cleats in an inclined part (particularly at a starting end) for elevating chips to a predetermined height.

The compressing device disclosed in Patent Literature 1 is provided in the vicinity of a discharging part which is included in a conveyor body and discharges chips, and therefore the compressing device cannot compress chips that are rolling in the inclined part. Moreover, the compressing device has a constant area of an opening through which chips are introduced, and therefore cannot receive chips in an amount greater than an acceptable amount.

In the device disclosed in Patent Literature 2, the pressing conveyor compresses chips in the inclined part, so that rolling of chips in the inclined part can be prevented. However, the pressing conveyor is large, and therefore there is a problem of an increase in overall configuration size of the device.

An object of an aspect of the present invention is to make it possible to reduce a size of a configuration which compresses chips so that the chips that are being elevated do not roll, and to adjust an amount of chips to be received by such a configuration.

### Solution to Problem

In order to attain the object, a conveying device in accordance with an aspect of the present invention includes: a conveyance belt which is provided so as to form a receiving part that receives chips, an inclined part that is inclined with respect to the receiving part and that elevates the chips received by the receiving part, and a discharging part that discharges the chips thus elevated; and a compressor which has a compression surface that faces the conveyance belt in a boundary region between the receiving part and the inclined part and has an introduction end part that introduces the chips from the receiving part to the compression surface, a distance between the introduction end part and the conveyance belt being variable so that the chips between the compression surface and the conveyance belt are compressed.

In the above configuration, the introduction end part and the conveyance belt form an introduction opening through which chips are introduced into the compressor. The distance between the introduction end part and the conveyance belt is variable, and this makes an area of the introduction opening variable. Consequently, the area of the introduction opening can be changed in accordance with a size of chips. Therefore, even if the size of chips varies, the chips can be introduced and compressed. In addition, chips are compressed in the boundary region, and this makes it possible to prevent chips from spilling in stages subsequent to the boundary region.

In the conveying device, it is possible that the compressor includes a compression panel and an elastic body, the compression panel having the introduction end part and the compression surface, the compression panel being supported by a pivot that is provided on a downstream side of the introduction end part in a direction, in which the chips are conveyed, so that the introduction end part is rotatable, and the compression panel compressing the chips, and the elastic body exerting, on the compression panel, force so as to bring the introduction end part closer to the conveyance belt against pushing-up force of the chips to push up the compression panel.

According to the configuration, large chips are introduced into the compressor so as to widely push up the compression panel. The elastic body exerts, on the compression panel, elastic force obtained when the compression panel is pushed up. This brings the introduction end part closer to the conveyance belt. Accordingly, the compression panel compresses chips by the force exerted by the elastic body. Therefore, as chips become larger, the chips can be compressed efficiently by greater elastic force exerted on the compression panel.

In the conveying device, it is possible that the elastic body is an extension spring for exerting, on the compression panel, restorative force that has been generated by extension in response to the pushing-up force of the chips to push up the compression panel.

According to the configuration, the extension spring extends when the chips push up the compression panel. Accordingly, as a size of chips increases, restorative force becomes greater which is generated when the extension spring attempts to return to its original condition. It is therefore possible to compress chips with restorative force corresponding to the size of chips.

In the conveying device, it is possible that the elastic body is a compression spring for exerting, on the compression panel, restorative force that has been generated by compression in response to the pushing-up force of the chips to push up the compression panel.

According to the configuration, the compression spring is compressed when the chips push up the compression panel. Accordingly, as a size of chips increases, restorative force becomes greater which is generated when the compression spring attempts to return to its original condition. It is therefore possible to compress chips with restorative force corresponding to the size of chips.

In the conveying device, it is possible that the elastic body is a leaf spring which supports the compression panel so that the introduction end part is rotatable, the leaf spring exerting, on the compression panel, restorative force that has been generated by deformation in response to the pushing-up force of the chips to push up the compression panel.

According to the configuration, the leaf spring is deformed when the chips push up the compression panel. Accordingly, as a size of chips increases, restorative force becomes greater which is generated when the leaf spring attempts to return to its original condition. It is therefore possible to compress chips with restorative force corresponding to the size of chips. The leaf spring also has a function to support the compression panel. Therefore, there is no need to provide a separate member for supporting the compression panel.

It is possible that the conveying device further includes a cover for covering the inclined part of the conveyance belt, and the compressor includes a compression panel and a weight, the compression panel having the introduction end part and the compression surface, the compression panel being supported by a pivot that is provided on a lower end of the cover so that the introduction end part is rotatable, and the compression panel compressing the chips, and the weight being provided on the compression panel.

According to the configuration, the compression panel is pushed down by a load of the weight, and thus chips are compressed. This makes it possible to compress chips with a simple configuration.

It is possible that the conveying device further includes: a sensor for detecting that the compression panel is at a position which is level with or higher than a predetermined position, the predetermined position being higher than a regular position at which an opening angle of the introduction end part with respect to the conveyance belt is minimized; and a control device, the control device, when the compression panel has not been detected to be at a position level with or higher than the predetermined position, controlling a moving speed of the conveyance belt to be a normal speed and, the control device, when the compression panel has been detected to be at the predetermined position, controlling the moving speed of the conveyance belt to be a high speed which is higher than the normal speed.

According to the configuration, in a state where an amount of chips is so small that the compression panel is not at a position which is level with or higher than the predetermined position, the conveyance belt moves at the normal speed. Moreover, in a state where the amount of chips is so large that the compression panel is at a position which is level with or higher than the predetermined position, the conveyance belt moves at the high speed. This makes it possible to efficiently convey chips in accordance with the amount of chips.

In addition, by controlling the moving speed of the conveyance belt as described above, the conveyance belt is run at the standard normal speed while the amount of chips is small. This makes it possible to reduce abrasion on components that constitute the conveyance belt and on components that come into contact with those components. This reduces a frequency of component replacement and extends a service life of the conveying device.

In addition, by controlling the moving speed of the conveyance belt as described above, the conveyance belt is run at the normal speed which is lower than the high speed while the amount of chips is small. This makes it possible to reduce an amount of coolant discharged along with chips. As a result, more coolant can be recovered to save coolant. Therefore, it is possible to reduce a running cost of a processing device that generates chips.

It is possible that the conveying device further includes: a driving device which drives the conveyance belt; a load sensor which detects a load on the driving device; and a control device, the control device, when the load which has been detected is a first threshold value or higher, controlling a moving speed of the conveyance belt to be a high speed and, the control device, when the load which has been detected is lower than the first threshold value, controlling the moving speed to be a low speed which is lower than the high speed.

The compressor compresses chips and thus pressure is exerted on the conveyance belt. This increases a load on the driving device that drives the conveyance belt. According to the above configuration, when the amount of chips is large and therefore the pressure exerted on the conveyance belt is large and the detected load is the first threshold value or higher, the moving speed of the conveyance belt is controlled to the high speed. Moreover, when the amount of chips is small and therefore the pressure exerted on the conveyance belt is small and the detected load is lower than the first threshold value, the moving speed of the conveyance belt is controlled to the low speed.

As such, the moving speed of the conveyance belt is controlled to one of the two speeds in accordance with the load on the driving device. This makes it possible to further achieve the foregoing efficient conveyance of chips, less frequent replacement of components, longer service life of the conveying device, and reduction of a running cost of the processing device.

In the control device, it is possible that, when the load which has been detected is not higher than a second threshold value that is lower than the first threshold value, the control device controls the moving speed to be a first low speed; and when the load which has been detected is lower than the first threshold value and higher than the second threshold value, the control device controls the moving speed to be a second low speed that is higher than the first low speed.

The case where the amount of chips is small includes a case where the amount is considerably small and a case where the amount is slightly small. According to the configuration, when the amount of chips is considerably small and therefore the pressure exerted on the conveyance belt is very small and the detected load is not higher than the second threshold value, the moving speed of the conveyance belt is controlled to the first low speed. Moreover, when the amount of chips is slightly small and therefore the pressure exerted on the conveyance belt is slightly small and the detected load is lower than the first threshold value and is higher than the second threshold value, the moving speed of the conveyance belt is controlled to the second low speed.

As such, when the load on the driving device is small, the moving speed of the conveyance belt is controlled to one of the two speeds in accordance with the load. This makes it possible to still further achieve the foregoing efficient conveyance of chips, less frequent replacement of components, longer service life of the conveying device, and reduction of a running cost of the processing device.

It is possible that the conveying device further includes: a driving device which drives the conveyance belt; a load sensor which detects a load on the driving device; and a speed control device, the speed control device, when the load which has been detected is a first threshold value or higher, controlling a moving speed of the conveyance belt to be a high speed, the speed control device, when the load which has been detected is lower than the first threshold value, controlling the moving speed to be a low speed which is lower than the high speed, the compressor including a compression panel and a driving mechanism, the compression panel having the introduction end part and the compression surface, the compression panel being supported by a pivot that is provided on a downstream side of the introduction end part in a direction, in which the chips are conveyed, so that the introduction end part is rotatable, and the compression panel compressing the chips, and the driving mechanism driving the compression panel so that a distance between the introduction end part and the conveyance belt is varied, the conveying device further including: an opening degree control device, the opening degree control device, when the load which has been detected is the first threshold value or higher, controlling the driving mechanism so that an opening degree at which the introduction end part opens with respect to the conveyance belt becomes a large opening degree and, the opening degree control device, when the load which has been detected is lower than the first threshold value, controlling the driving mechanism so that the opening degree becomes a small opening degree that is smaller than the large opening degree.

The compressor compresses chips and thus pressure is exerted on the conveyance belt. This increases a load on the driving device. According to the configuration, when the amount of chips is large and therefore the pressure exerted on the conveyance belt is large and the detected load is the first threshold value or higher, the driving mechanism is controlled so that the opening degree of the introduction end part becomes the large opening degree, and the moving speed of the conveyance belt is controlled to the high speed. Moreover, when the amount of chips is small and therefore the pressure exerted on the conveyance belt is small and the detected load is lower than the first threshold value, the driving mechanism is controlled so that the opening degree of the introduction end part becomes the small opening degree, and the moving speed of the conveyance belt is controlled to the low speed.

As such, the opening degree of the introduction end part is controlled to one of the two opening degrees in accordance with the load on the driving device. According to the configuration, when the load on the driving device is small, chips can be compressed by reducing the opening degree. If chips roll in the inclined part, the chips agglomerate to form larger clusters. In order to avoid this, chips are compressed to some extent even when the amount of the chips is small, and this makes it possible to prevent the chips from rolling in the inclined part. Moreover, when the load on the driving device is large, the opening degree is set to the larger opening degree, and this makes it possible to introduce and compress a large amount of chips.

Furthermore, the moving speed of the conveyance belt is controlled to one of the two speeds in accordance with the load on the driving device. This makes it possible to further achieve the foregoing efficient conveyance of chips, less frequent replacement of components, longer service life of the conveying device, and reduction of a running cost of the processing device.

In the conveying device, it is possible that, when the load which has been detected is not higher than a second threshold value that is lower than the first threshold value, the speed control device controls the moving speed of the conveyance belt to be a first low speed; when the load which has been detected is lower than the first threshold value and higher than the second threshold value, the speed control device controls the moving speed to be a second low speed that is higher than the first low speed; when the load which has been detected is not higher than the second threshold value, the opening degree control device controls the opening degree to be a first small opening degree; and when the load which has been detected is lower than the first threshold value and higher than the second threshold value, the opening degree control device controls the opening degree to be a second small opening degree that is greater than the first small opening degree.

The case where the amount of chips is small includes a case where the amount is considerably small and a case where the amount is slightly small. According to the configuration, when the amount of chips is considerably small and therefore the pressure exerted on the conveyance belt is very small and the detected load is not higher than the second threshold value, the opening degree of the introduction end part is controlled to the first small opening degree, and the moving speed of the conveyance belt is controlled to the first low speed. Moreover, when the amount of chips is slightly small and therefore the pressure exerted on the conveyance belt is slightly small and the detected load is lower than the first threshold value and is higher than the second threshold value, the opening degree of the introduction end part is controlled to the second small opening degree, and the moving speed of the conveyance belt is controlled to the second low speed.

As such, when the load on the driving device is small, the opening degree of the introduction end part is controlled to one of the two opening degrees in accordance with the load, and the moving speed of the conveyance belt is controlled to one of the two speeds in accordance with the load. This makes it possible to still further achieve the foregoing efficient conveyance of chips, less frequent replacement of components, longer service life of the conveying device, and reduction of a running cost of the processing device.

In the conveying device, it is possible that the boundary region is formed into a curved shape; the introduction end part is formed so as to be warped upward; and the compression surface is formed into a curved shape that is along the curved shape of the boundary region.

According to the configuration, by forming the introduction end part so as to warp upward, large chips can be easily captured and introduced. Further, by forming the compression surface in the curved shape, it is possible to gradually compress chips while conveying the chips by the boundary region that is also formed in the curved shape. This makes it possible to avoid an excessive increase of load on the conveyance belt, which may be caused by sudden compression of chips.

### Advantageous Effects of Invention

According to an aspect of the present invention, it is possible to reduce a size of a configuration for compressing chips in order to prevent rolling of the chips while being elevated and to adjust an amount of the chips received by the configuration.

### Brief Description of Drawings

Fig. 1 is a side view illustrating a chip conveying device in accordance with Embodiments 1 through 4 of the present invention.
Fig. 2 is an enlarged side view illustrating a compression mechanism of the chip conveying device in accordance with Embodiment 1 of the present invention.
Fig. 3 is a cross-sectional view taken along the line A-A of Fig. 2.
Fig. 4 is a diagram illustrating an operation of the compression mechanism.
Fig. 5 is an enlarged side view illustrating a compression mechanism of the chip conveying device in accordance with Embodiment 2 of the present invention.
Fig. 6 is an enlarged side view illustrating a compression mechanism of the chip conveying device in accordance with Embodiment 3 of the present invention.
Fig. 7 is a cross-sectional view taken along the line B-B of Fig. 6.
Fig. 8 is an enlarged side view illustrating a compression mechanism of the chip conveying device in accordance with Embodiment 4 of the present invention.
Fig. 9 is an enlarged side view illustrating a compression mechanism of the chip conveying device in accordance with Embodiment 5 of the present invention.
Fig. 10 is a side view illustrating a chip conveying device in accordance with Embodiment 6 of the present invention.
Fig. 11 is a side view illustrating a chip conveying device in accordance with Embodiment 7 of the present invention.
Fig. 12 is a cross-sectional view taken along the line C-C of Fig. 11.

### Description of Embodiments

### Embodiment 1

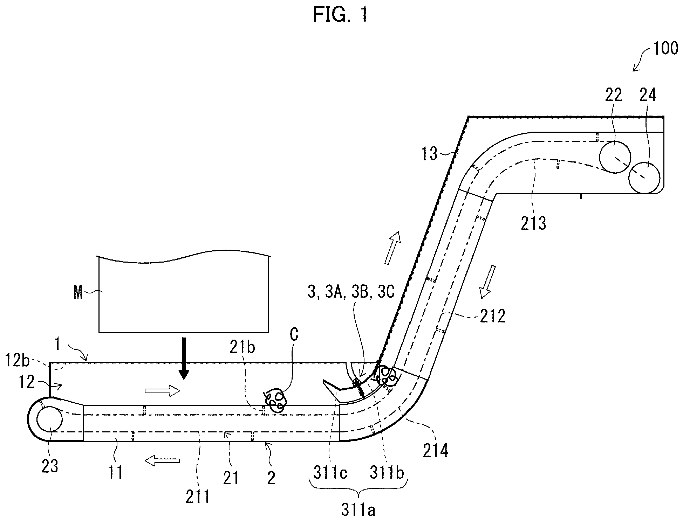

The following description will discuss Embodiment 1 of the present invention with reference to Figs. 1 through 4.

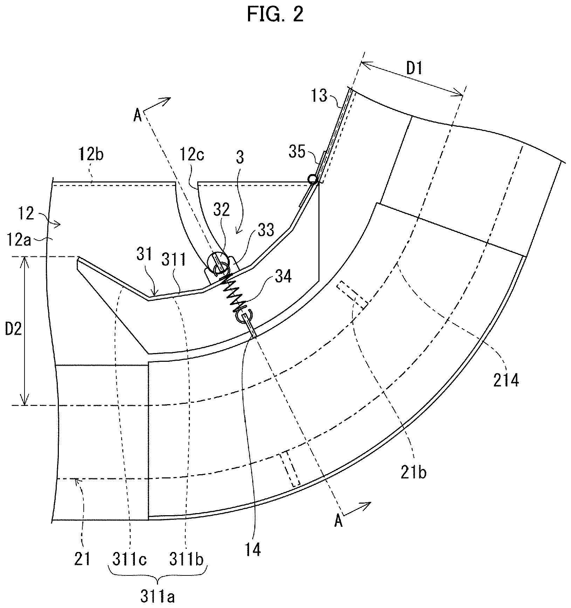

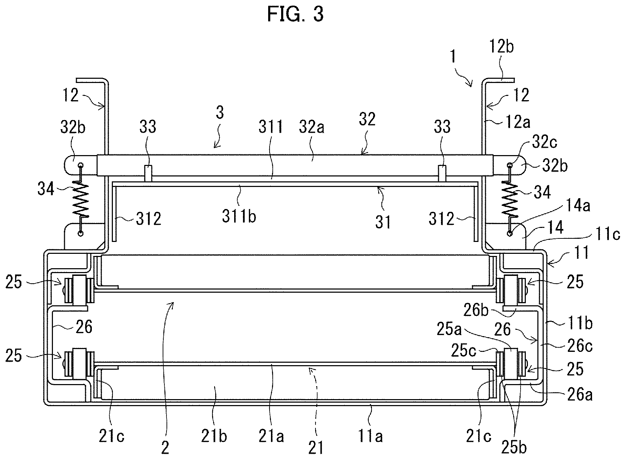

Fig. 1 is a side view illustrating a chip conveying device 100 in accordance with Embodiment 1. Fig. 2 is an enlarged side view illustrating a compression mechanism 3 of the chip conveying device 100. Fig. 3 is a cross-sectional view taken along the line A-A of Fig. 2.

As illustrated in Fig. 1, the chip conveying device 100 (conveying device) includes a conveyor frame 1, a conveyor 2, and a compression mechanism 3 (compressor). The chip conveying device 100 conveys chips discharged from a machine tool M to a predetermined height and drops the chips to a collection box (not illustrated). The chips include cutting dust, grinding dust, cutting powder, and the like generated as a result of processing a workpiece by the machine tool M.

The conveyor frame 1 has a conveyor case 11, conveyor skirts 12, a conveyor cover 13, and a locking panel 14.

The conveyor case 11 movably supports and accommodates the conveyor 2. As illustrated in Fig. 3, the conveyor case 11 has a bottom part 11a, two lateral parts 11b, and two upper parts 11c. The lateral parts 11b are formed so as to stand from both sides of the bottom part 11a. The upper parts 11c face inward from upper ends of the lateral parts 11b, and are formed short so as to face the bottom part 11a. An opening is formed between the upper parts 11c of the conveyor case 11.

In a case where the machine tool M carries out processing with use of coolant, the coolant is discharged along with chips. The discharged coolant is temporarily stored in the conveyor case 11 and then recovered.

Each of the conveyor skirts 12 has a lateral wall 12a and a flange 12b. The lateral wall 12a is formed so as to stand from an end of the upper part 11c of the conveyor case 11. The flange 12b is formed so as to face outward from an upper end of the lateral wall 12a. As illustrated in Fig. 2, in the lateral wall 12a, a notch 12c is provided for guiding a moving direction of a bar 32 of the compression mechanism 3 (described later).

The conveyor cover 13 is joined to the flanges 12b of the conveyor skirts 12 so as to cover an inclined part 212 and a discharging part 213 (described later) of the conveyor 2.

The locking panel 14 is provided for locking one end of an extension spring 34 (described later). The locking panel 14 is joined to the upper part 11c of the conveyor case 11 and to the lateral wall 12a of the conveyor skirt 12. In the locking panel 14, a hole 14a is provided for locking the extension spring 34.

The conveyor 2 is arranged so as to form a receiving part 211, an inclined part 212, and a discharging part 213. The receiving part 211 is a horizontal part that is arranged along an installation surface for the chip conveying device 100 and receives chips from the machine tool M. The inclined part 212 is inclined with respect to the receiving part 211 and elevates chips received by the receiving part 211. The discharging part 213 discharges the elevated chips so that the chips drop to the collection box.

In the conveyor 2, a boundary region 214 is provided between the receiving part 211 and the inclined part 212. The boundary region 214 is formed in a curved shape so as to smoothly connect the receiving part 211 with the inclined part 212.

The conveyor 2 has a hinge belt 21 (conveyance belt), a driving sprocket 22, a driven sprocket 23, a driving motor 24 (driving device), a pair of side chains 25, and a guide rail 26.

The hinge belt 21 is provided inside the conveyor case 11 (described later) of the conveyor frame 1. The hinge belt 21 is an endless conveying belt, and is bridged between the driving sprocket 22 and the driven sprocket 23. The hinge belt 21 is driven to move in a constant direction by the driving sprocket 22. The hinge belt 21 conveys chips from the machine tool M on a feed side located on an upper side, and moves from the driving sprocket 22 to the driven sprocket 23 on a return side located on a lower side.

As illustrated in Fig. 3, the hinge belt 21 has a belt body 21a, cleats 21b, and side wings 21c.

The belt body 21a includes a plurality of hinge plates and hinge pipes (not illustrated). The hinge plates have a width equal to that of the belt body 21a, and are connected to form hinge structures each of which is constituted by adjacent hinge plates and a hinge pipe.

The cleats 21b are arranged on a circumference surface of the belt body 21a at intervals each of which corresponds to some hinge plates. Each of the cleats 21b is a plate-like member and is provided so as to stand perpendicularly to the outer surface of the hinge plate. The cleats 21b support chips while preventing rolling of the chips on the hinge belt 21 at the feed side of the hinge belt 21, and scrape off chips accumulated in a bottom part of the conveyor frame 1 on the return side of the hinge belt 21.

The side wings 21c are fixed to the end parts on both sides of the circumference surface of the belt body 21a. The side wings 21c are arranged such that adjacent ones of the side wings 21c overlap with each other to form no gap therebetween.

The side chains 25 are provided on the end parts on both sides of the hinge belt 21. The side chains 25 have rollers 25a and link plates 25b and 25c.

The link plates 25b are provided on both sides of two adjacent rollers 25a so as to connect the two adjacent rollers 25a together. The link plates 25c are provided on both sides of two rollers 25a so as to connect the two rollers 25a together, where one of the two rollers 25a is one of the above described two adjacent rollers 25a connected by the link plates 25b and the other is a roller 25a which is adjacent to that one of the above described two adjacent rollers 25a. The link plate 25c is provided on the outer side of the link plate 25b so as to overlap with the link plate 25b.

The roller 25a is connected with the link plates 25b and 25c by a portion protruding from the foregoing hinge plate of the hinge pipe. The side chain 25 is thus formed by connecting the plurality of rollers 25a by the link plates 25b and 25c. Moreover, the side chain 25 engages with the driving sprocket 22 and the driven sprocket 23. Thus, the hinge belt 21 can be moved by receiving driving force transmitted through the driving sprocket 22 from the driving motor 24.

The guide rail 26 is provided for guiding movement of the hinge belt 21. The hinge belt 21 is provided along the both lateral parts 11b of the conveyor case 11. The hinge belt 21 has a lower horizontal part 26a, an upper horizontal part 26b, and a middle part 26c. The lower horizontal part 26a is arranged parallel to the bottom part 11a above the bottom part 11a of the conveyor case 11. The upper horizontal part 26b is arranged parallel to the lower horizontal part 26a above the lower horizontal part 26a. The middle part 26c is a portion connecting the lower horizontal part 26a with the upper horizontal part 26b, and is fixed to inner surfaces of the lateral parts 11b of the conveyor case 11.

The rollers 25a of the side chain 25 are provided on upper surfaces of the lower horizontal part 26a and the upper horizontal part 26b. The hinge belt 21 can be moved along the guide rail 26 when the rollers 25a roll on the upper horizontal part 26b on the feed side and roll on the lower horizontal part 26a on the return side.

In embodiments including Embodiment 1, the hinge belt 21 is used as the conveyance belt. However, another belt can be used as the conveyance belt. For example, a chain and scrapers used in a scraper conveyor can be used as the conveyance belt. Alternatively, a chain and an apron attached to the chain, which are used in an apron conveyor, can be used as the conveyance belt.

The compression mechanism 3 compresses, at the boundary region 214, chips received by the receiving part 211 of the conveyor 2. As illustrated in Fig. 2 and Fig. 3, the compression mechanism 3 has a compression cover 31 (compression panel), a bar 32, two supporting members 33, two extension springs 34, and a hinge 35.

The compression cover 31 is constituted by an upper plate 311 and two lateral plates 312. The lateral plates 312 are provided so as to extend downward from both ends of the upper plate 311.

The upper plate 311 has a counter surface 311a that faces the hinge belt 21. The counter surface 311a includes a compression surface 311b and an introduction end part 311c. The compression surface 311b faces the hinge belt 21 in the boundary region 214. As illustrated in Fig. 2, the compression surface 311b is formed in a curved shape along the curved shape of the boundary region 214 of the hinge belt 21 when being closed with respect to the hinge belt 21. The introduction end part 311c protrudes from the boundary region 214 of the hinge belt 21 toward the receiving part 211, and is formed to warp upward in order to introduce chips from the receiving part 211 into the compression surface 311b.

The bar 32 is arranged so that a longitudinal direction thereof is in an orientation perpendicular to the conveyance direction in which chips are conveyed by the hinge belt 21 and to the surface of the hinge belt 21. The bar 32 is provided so that the end parts 32b on both sides of the bar body 32a protrude from the notches 12c of the conveyor skirts 12. The bar 32 is supported by and fixed to the upper plate 311 by the supporting members 33 which are spaced from each other on the upper plate 311 of the compression cover 31. In each of the end parts 32b, a hole 32c is provided for locking the other end of the extension spring 34.

The extension spring 34 is an elastic body which exerts force that is against pushing-up force of chips to push up the compression cover 31 and that allows the compression cover 31 to bring the introduction end part 311c closer to the hinge belt 21. The extension spring 34 has a lower end which is engaged with the hole 14a in the locking panel 14 and has a upper end which is engaged with the hole 32c in the end part 32b of the bar 32. Thus, the extension spring 34 exerts restorative force, which is force to shrink generated when the extension spring 34 is pulled, on the locking panel 14 from the end part 32b. Thus, the extension spring 34 exerts the restorative force on the compression cover 31.

A rear end of the upper plate 311 of the compression cover 31 at which chips are discharged is joined, with the hinge 35, to a lower end of the outer surface of the conveyor cover 13. Thus, the hinge 35 supports the compression cover 31 with a central shaft serving as a pivot of rotation so that the introduction end part 311c can rotate. The hinge 35 is arranged such that the central shaft of the hinge 35 is located at the lower end of the conveyor cover 13 which is the downstream side of the direction in which chips are conveyed in the boundary region 214.

In the compression mechanism 3 having such a structure, the distances between the introduction end part 311c of the compression cover 31 and the hinge belt 21 can be changed. The compression mechanism 3 compresses, by restorative force of the extension spring 34, chips between the compression surface 311b and the hinge belt 21.

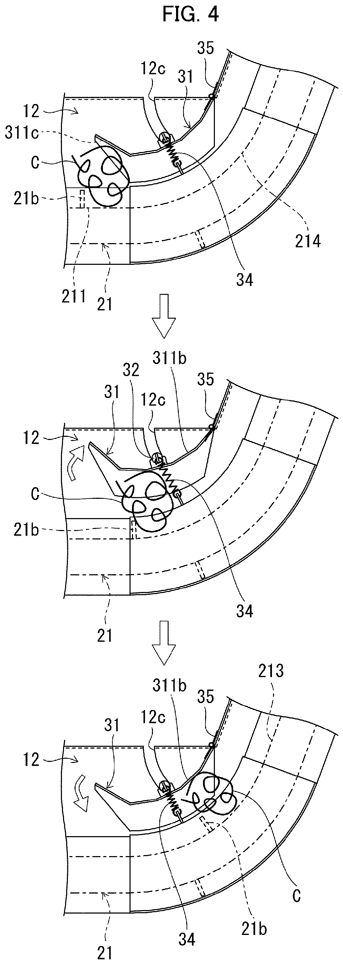

Operations of the compression mechanism 3 configured as described above will be described below. Fig. 4 is a diagram illustrating an operation of the compression mechanism 3.

In the following description, chips C have become larger to some extent beyond a height of the cleats 21b.

As illustrated in the upper part of Fig. 4, the compression mechanism 3 captures, by the introduction end part 311c, chips C that have come to a terminal end position of the receiving part 211 of the hinge belt 21. In this state, the compression cover 31 is not yet opened with respect to the hinge belt 21.

As illustrated in the middle part of Fig. 4, when the chips C have been conveyed from the introduction end part 311c to a position reaching the boundary region 214, the chips C push up the upper plate 311 as the chips C move in the boundary region 214 toward the inclined part 212. This causes the compression cover 31 to rotate upward about the central shaft of the hinge 35 serving as the pivot. At this time, the bar 32 is moved upward by being guided along the notch 12c formed in an arc shape. Moreover, the extension spring 34 is extended when the upper plate 311 is pushed up.

The extension spring 34 exerts restorative force, which is obtained by the extension, on the compression cover 31 from below. Thus, as shown in the lower part of Fig. 4, the compression cover 31 closes to approach the hinge belt 21. In this state, the force to close the compression cover 31 is exerted on the chips C, so that the chips C are compressed. The compressed chips C are conveyed directly toward the inclined part 212.

The chip conveying device 100 in accordance with Embodiment 1 includes the hinge belt 21 and the compression mechanism 3, which are configured as described above.

In the above configuration, the introduction end part 311c and the hinge belt 21 of the compression mechanism 3 form an introduction opening through which chips are introduced into the compression mechanism 3. Since the distances between the introduction end part 311c and the hinge belt 21 is variable by the rotational structure of the compression cover 31, the area of the introduction opening is variable. Consequently, the area of the introduction opening can be changed in accordance with a size of chips. Therefore, even if the size of chips varies, the chips can be introduced and compressed. In addition, chips are compressed in the boundary region 214, and this makes it possible to prevent chips from spilling in stages subsequent to the boundary region 214.

Moreover, large chips are introduced into the compression mechanism 3 so as to widely push up the compression cover 31. The extension spring 34 which is the elastic body exerts, on the compression cover 31, elastic force obtained when the compression cover 31 is pushed up. This brings the introduction end part 311c closer to the hinge belt 21. Therefore, the compression cover 31 compresses chips by the force exerted by the extension spring 34. Therefore, as chips become larger, the chips can be compressed efficiently by greater elastic force exerted on the compression cover 31.

Specifically, the extension spring 34 extends when the chips push up the compression cover 31. As the size of chips increases, restorative force becomes greater which is generated when the extension spring 34 attempts to return to its original condition. It is therefore possible to compress chips with restorative force corresponding to the size of chips.

As illustrated in Fig. 2, a distance D1 between the central shaft of the hinge 35 serving as the pivot of rotation of the compression cover 31 and the hinge belt 21 on the feed side is fixed. Meanwhile, a distance D2 between a leading end of the introduction end part 311c located upstream of the pivot in the conveyance direction and the hinge belt 21 on the feed side can be changed by rotation of the compression cover 31.

With the configuration, even when chips greater in size than the distance D1 have been conveyed to the boundary region 214, the chips introduced by the compression cover 31 that is opened widely are compressed by the compression mechanism 3, and thus become smaller than the distance D1. Therefore, chips do not agglomerate to form clusters larger than the distance D1 due to repeated spillage in the boundary region 214. It is therefore possible to avoid a case where largely gathered chips cause an overload on the conveyor 2 to stop the conveyor 2. This makes it possible to reliably convey chips.

In general, the inclined part of the conveyor for conveying chips is inclined up to 60° with respect to the horizontal plane. Therefore, if the inclined part is inclined at an inclination angle of 60° or more, chips easily rolls. Therefore, it is not possible to increase the inclination angle of the inclined part to 60° or more. In view of this, a package size of the conveyor for transportation becomes large, and it is also necessary to secure a large space for installation of the conveyor.

In contrast, the chip conveying device 100 can prevent rolling of chips in the inclined part 212 by compressing chips in the boundary region 214. Therefore, the inclination angle of the inclined part 212 can be enlarged to an angle greater than 60° (e.g., 70°). This makes it possible not only to reduce the package size of the chip conveying device 100 for transportation, but also to reduce the space for installing the chip conveying device 100.

In Embodiment 1, the compression cover 31 is formed of a highly rigid material. However, the material forming the compression cover 31 can be a material such as an elastically deformable rubber. According to such a compression cover 31, a lower end of a lateral surface corresponding to the lateral plate 312 is fixed to the conveyor skirt 12. With the configuration, the lateral surface of the compression cover 31 extends as chips enter the compression cover 31, and the chips are thus compressed with restorative force caused by this extension. A compression mechanism 3 including such a compression cover 31 is deformed by expansion and contraction, and therefore does not need to include the extension spring 34. Further, it is preferable that the compression surface of such a compression cover 31 is formed of a material such as a metal or a resin which is less frictional with chips and has higher strength.

### Embodiment 2

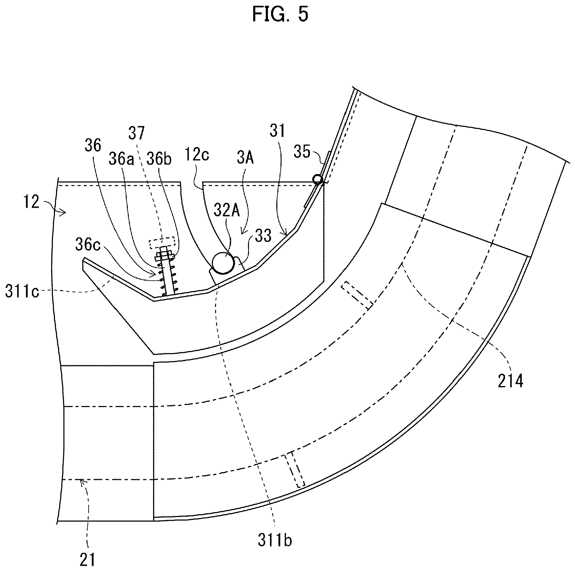

The following description will discuss Embodiment 2 of the present invention with reference to Figs. 1 and 5. In Embodiment 2, constituent elements having the same functions as those in Embodiment 1 are denoted by the same reference numerals, and descriptions of such constituent elements are omitted.

Fig. 5 is an enlarged side view illustrating a compression mechanism 3A of a chip conveying device 100 in accordance with Embodiment 2.

As illustrated in Fig. 1, the chip conveying device 100 in accordance with Embodiment 2 is provided with the compression mechanism 3A. A configuration of the chip conveying device 100 other than the compression mechanism 3A is the same as that of the chip conveying device 100 other than the compression mechanism 3 in Embodiment 1.

The compression mechanism 3A compresses, in a boundary region 214, chips received by a receiving part 211 of a conveyor 2. As illustrated in Fig. 5, the compression mechanism 3A has a compression cover 31, a bar 32A, two supporting members 33, a hinge 35, a compression spring 36, and a fixing member 37.

The bar 32A does not have end parts 32b provided at both ends of the bar 32 in Embodiment 1.

The compression spring 36 is an elastic body which exerts force that is against pushing-up force of chips to push up the compression cover 31 and that allows the compression cover 31 to bring an introduction end part 311c closer to a hinge belt 21. The compression spring 36 has a shaft 36a, a pressing member 36b, and a spring 36c. The spring 36c is provided around the shaft 36a. The pressing member 36b fixes an upper end of the shaft 36a and an upper end of the spring 36c.

A lower end of the shaft 36a and a lower end of the spring 36c are fixed to an upper surface of an upper plate 311 of the compression cover 31. The pressing member 36b is fixed to the fixing member 37. The fixing member 37 is formed in a plate shape, spans conveyor skirts 12 which face each other, and both ends of the fixing member 37 are fixed to the conveyor skirts 12. According to the arrangement, the compression spring 36 exerts restorative force for extension, which is generated when the compression spring 36 is compressed, on the compression cover 31 from above.

Operations of the compression mechanism 3A configured as described above will be described below.

When chips have reached the introduction end part 311c, the chips push up the upper plate 311 against the compressive force of the compression spring 36 as the chips enter the boundary region 214. This causes the compression cover 31 to rotate upward and open with respect to the hinge belt 21.

The compression spring 36 exerts restorative force, which has been obtained by the compression, on the compression cover 31 as force for pressing the compression cover 31. Thus, the compression cover 31 closes to approach the hinge belt 21. In this state, the force to close the compression cover 31 is exerted on the chips, so that the chips are compressed. The compressed chips are conveyed directly toward the inclined part 212.

The chip conveying device 100 in accordance with Embodiment 2 includes the hinge belt 21 and the compression mechanism 3A, which are configured as described above.

According to the configuration, the compression mechanism 3A includes the compression spring 36, and the compression spring 36 is compressed when the chips push up the compression cover 31. As the size of chips increases, restorative force of the compression spring 36 to return to its original condition becomes greater. It is therefore possible to compress chips by restorative force corresponding to the size of chips.

### Embodiment 3

The following description will discuss Embodiment 3 of the present invention with reference to Figs. 1, 6, and 7. In Embodiment 3, constituent elements having the same functions as those in Embodiments 1 and 2 are denoted by the same reference numerals, and descriptions of such constituent elements are omitted.

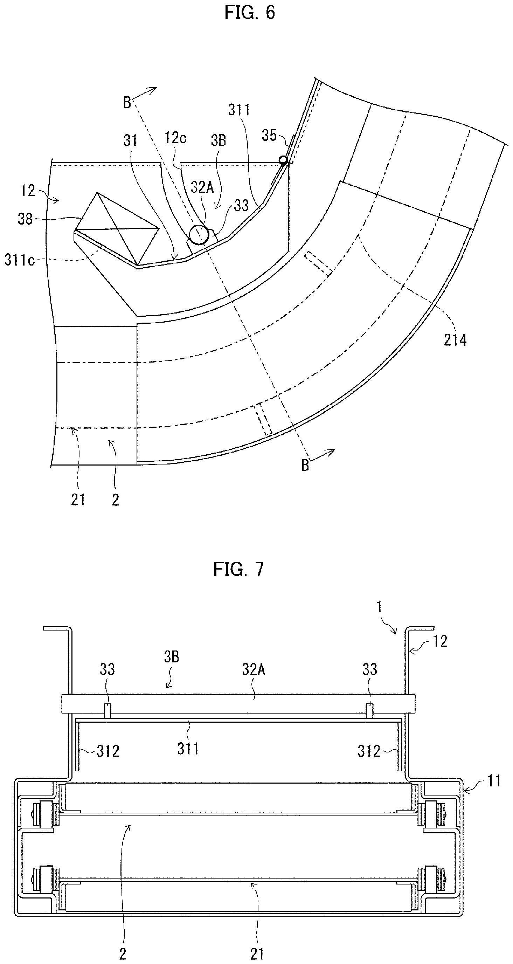

Fig. 6 is an enlarged side view illustrating a compression mechanism 3B of a chip conveying device 100 in accordance with Embodiment 3. Fig. 7 is a cross-sectional view taken along the line B-B of Fig. 6.

As illustrated in Fig. 1, the chip conveying device 100 in accordance with Embodiment 3 is provided with the compression mechanism 3B. A configuration of the chip conveying device 100 other than the compression mechanism 3B is the same as that of the chip conveying device 100 other than the compression mechanism 3 in Embodiment 1.

The compression mechanism 3B compresses, in a boundary region 214, chips received by a receiving part 211 of a conveyor 2. As illustrated in Figs. 6 and 7, the compression mechanism 3B has a compression cover 31, a bar 32A, two supporting members 33, a hinge 35, and a weight 38.

The bar 32A is arranged so that a longitudinal direction thereof is in an orientation perpendicular to the conveyance direction in which chips are conveyed by a hinge belt 21 and to a surface of the hinge belt 21. The bar 32A is provided so that end parts on both sides of the bar 32A protrude from notches 12c of conveyor skirts 12. The bar 32A is supported by and fixed to an upper plate 311 by the supporting members 33.

The weight 38 is provided on and fixed to an introduction end part 311c on the upper plate 311 of the compression cover 31.

Operations of the compression mechanism 3B configured as described above will be described below.

When chips have reached the introduction end part 311c, the chips push up the upper plate 311 against a load of the weight 38 as the chips enter the boundary region 214. This causes the compression cover 31 to rotate upward and open with respect to the hinge belt 21.

The weight 38 exerts pressing force by its load on the compression cover 31 from above. Thus, the compression cover 31 closes to approach the hinge belt 21. In this state, the force to close the compression cover 31 is exerted on the chips, so that the chips are compressed. The compressed chips are conveyed directly toward the inclined part 212.

The chip conveying device 100 in accordance with Embodiment 3 includes the hinge belt 21 and the compression mechanism 3B, which are configured as described above.

According to the configuration, the compression cover 31 is pushed down by the load of the weight 38, and thus chips are compressed. This makes it possible to compress chips with a simple configuration, without the need for the foregoing mechanism such as the extension spring 34 (see Fig. 2) or the compression spring 36 (see Fig. 5).

### Embodiment 4

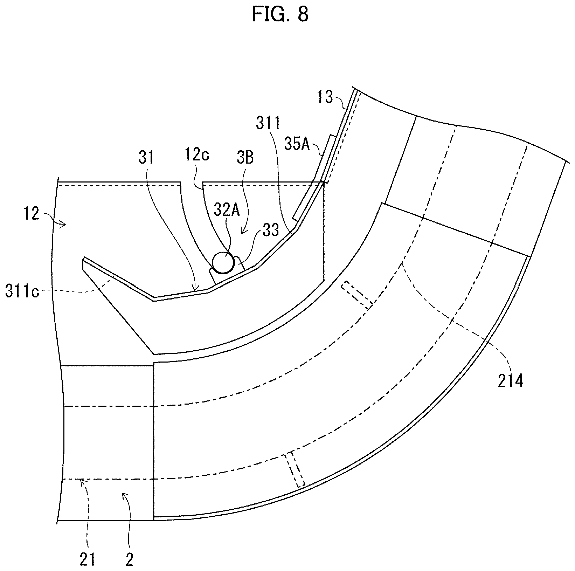

The following description will discuss Embodiment 4 of the present invention with reference to Figs. 1 and 8. In Embodiment 4, constituent elements having the same functions as those in Embodiments 1 through 3 are denoted by the same reference numerals, and descriptions of such constituent elements are omitted.

Fig. 8 is an enlarged side view illustrating a compression mechanism 3C of a chip conveying device 100 in accordance with Embodiment 4.

As illustrated in Fig. 1, the chip conveying device 100 in accordance with Embodiment 4 is provided with the compression mechanism 3C. A configuration of the chip conveying device 100 other than the compression mechanism 3C is the same as that of the chip conveying device 100 other than the compression mechanism 3 in Embodiment 1.

The compression mechanism 3C compresses, in a boundary region 214, chips received by a receiving part 211 of a conveyor 2. As illustrated in Fig. 8, the compression mechanism 3C has a compression cover 31, a bar 32A, two supporting members 33, and a leaf spring 35A (elastic body). The leaf spring 35A is provided instead of the foregoing hinge 35 (see Fig. 6) in the compression mechanism 3B.

The leaf spring 35A is an elastic body which exerts force that is against pushing-up force of chips to push up the compression cover 31 and that allows the compression cover 31 to bring an introduction end part 311c closer to a hinge belt 21. A state of the leaf spring 35A illustrated in Fig. 8 is a state in which the leaf spring 35A is not deformed.

A rear end of an upper plate 311 of the compression cover 31 at which chips are discharged is joined, with the leaf spring 35A, to a lower end of an outer surface of a conveyor cover 13. Thus, the leaf spring 35A allows the compression cover 31 to be supported by the conveyor cover 13 so that the introduction end part 311c can rotate.

The leaf spring 35A rotates about a central shaft which is a portion between the rear end of the upper plate 311 and the lower end of the conveyor cover 13. The central shaft around which the leaf spring 35A rotates is located at the lower end of the conveyor cover 13 which is the downstream side of the direction in which chips are conveyed in the boundary region 214.

Operations of the compression mechanism 3C configured as described above will be described below.

When chips have reached the introduction end part 311c, the chips push up the upper plate 311 against the pushing force of the leaf spring 35A as the chips enter the boundary region 214. This causes the compression cover 31 to rotate upward and open with respect to the hinge belt 21.

In this case, the leaf spring 35A is deformed so that a portion supporting the rear end of the upper plate 311 is cambered. The leaf spring 35A exerts restorative force, which has been obtained by the deformation, on the compression cover 31 as force for closing the compression cover 31. Thus, the compression cover 31 closes to approach the hinge belt 21. In this state, the force to close the compression cover 31 is exerted on the chips, so that the chips are compressed. The compressed chips are conveyed directly toward the inclined part 212.

The chip conveying device 100 in accordance with Embodiment 4 includes the hinge belt 21 and the compression mechanism 3C, which are configured as described above.

According to the configuration, the compression mechanism 3C includes the leaf spring 35A, and the leaf spring 35A is deformed to camber when the chips push up the compression cover 31. As the size of chips increases, restorative force becomes greater which is generated when the leaf spring 35A attempts to return to its original condition. It is therefore possible to compress chips with restorative force corresponding to the size of chips.

Moreover, the leaf spring 35A serves also as the hinge 35. From this, it is not necessary to provide a loading member such as the weight 38 (see Fig. 6) of the compression mechanism 3B. This makes it possible to compress chips with a simple configuration.

### Embodiment 5

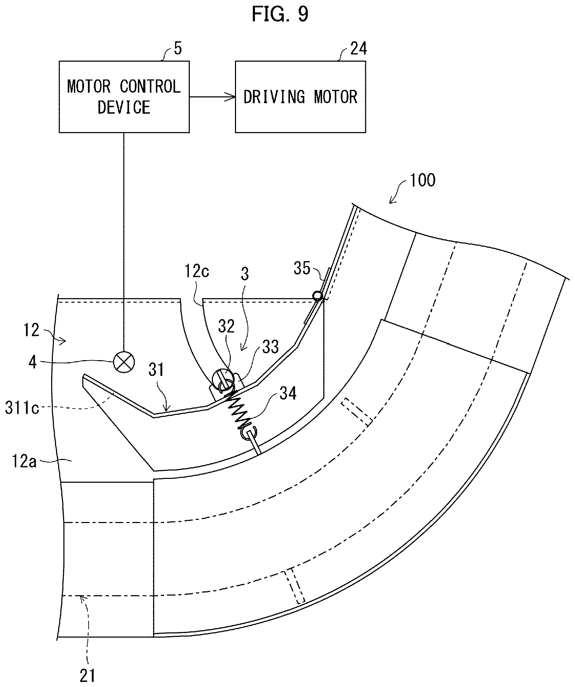

The following description will discuss Embodiment 5 of the present invention with reference to Figs. 1 and 9. In Embodiment 5, constituent elements having the same functions as those in Embodiment 1 are denoted by the same reference numerals, and descriptions of such constituent elements are omitted.

Fig. 9 is an enlarged side view illustrating a compression mechanism 3 of a chip conveying device 100 in accordance with Embodiment 5.

As illustrated in Fig. 9, the chip conveying device 100 in accordance with Embodiment 4 includes a position sensor 4 (sensor) and a motor control device 5 (control device). Further, as illustrated in Fig. 1, the configuration of the chip conveying device 100 in accordance with Embodiment 4 other than the position sensor 4 and the motor control device 5 is the same as that of the chip conveying device 100 in accordance with Embodiment 1.

Note that, although the chip conveying device 100 is provided with the compression mechanism 3, it is possible that the chip conveying device 100 is provided with the foregoing compression mechanism 3A, 3B or 3C instead of the compression mechanism 3.

The position sensor 4 detects whether or not an introduction end part 311c of a compression cover 31 is at a position level with or higher than a predetermined position, which is higher than a regular position that minimizes an opening degree at which the introduction end part 311c opens with respect to the hinge belt 21. The position sensor 4 is attached to a lateral wall 12a of a conveyor skirt 12.

The position sensor 4 is, for example, an optical sensor, and emits light toward a lateral wall 12a facing the lateral wall 12a to which the position sensor 4 is attached, and receives reflection from an object (irradiation object) irradiated with the light. The position sensor 4 detects, based on the received light, a distance between the position sensor 4 and the irradiation object. Thus, the position sensor 4 can detect whether or not the introduction end part 311c is at a position level with or higher than the predetermined position on the basis of the distance.

Specifically, in a case where the irradiation object facing the position sensor 4 is the lateral wall 12a, the position sensor 4 does not detect that the introduction end part 311c is at a position level with or higher than the predetermined position when the position sensor 4 has received the reflected light from the lateral wall 12a. Meanwhile, in a case where the irradiation object facing the position sensor 4 is a lateral plate 312 of the compression cover 31, the position sensor 4 detects that the introduction end part 311c is at a position level with or higher than the predetermined position when the position sensor 4 has received the reflected light from the lateral plate 312 of the compression cover 31.

The motor control device 5 controls a moving speed of the hinge belt 21 by controlling a rotation speed of the driving motor 24 based on a detection result outputted from the position sensor 4. Specifically, in a case where it has not been detected that the introduction end part 311c is at a position level with or higher than the predetermined position, the motor control device 5 controls the moving speed of the hinge belt 21 to a normal speed. Alternatively, in a case where it has been detected that the introduction end part 311c is at a position level with or higher than the predetermined position, the motor control device 5 controls the moving speed of the hinge belt 21 to a high speed that is higher than the normal speed.

The normal speed is a speed at which chips do not need to be compressed by the compression mechanism 3. In other words, the normal speed is a standard speed at which chips can be conveyed without trouble when the chips are not so large as to push up the compression cover 31.

Operations of the chip conveying device 100 configured as described above will be described below.

In a state in which an amount of chips is small, the chips do not push up the compression cover 31, and therefore an opening degree of the introduction end part 311c is minimized. In this state, the introduction end part 311c is at the regular position, and therefore the position sensor 4 does not detect that the introduction end part 311c is at a position level with or higher than the predetermined position. In this case, the motor control device 5 controls the moving speed of the hinge belt 21 to the normal speed.

In a case where the amount of chips increases and the chips push up the compression cover 31, the opening degree of the introduction end part 311c increases. In this state, when the introduction end part 311c is at a position level with or higher than the predetermined position, the position sensor 4 detects this condition. In this case, the motor control device 5 controls the moving speed of the hinge belt 21 to the high speed.

Note that, at a time point when the position sensor 4 has detected that the introduction end part 311c is at a position level with or higher than the predetermined position, the motor control device 5 controls the moving speed of the belt to the high speed. In a state in which the position sensor 4 detects that the introduction end part 311c is at a position level with or higher than the predetermined position even after elapse of a time period (e.g., 1 minute) taken to convey chips from the boundary region 214 to the discharging part 213, this means that large chips are being continuously conveyed. In this case, the motor control device 5 maintains the moving speed of the hinge belt 21 at the high speed.

Meanwhile, when large chips no longer enter the compression mechanism 3 during the time period, the position sensor 4 does not detect that the introduction end part 311c is at a position level with or higher than the predetermined position. In this case, the motor control device 5 reset the speed of the hinge belt 21 to the normal speed in a slight time after the time period has elapsed. Thus, in a case where the amount of chips is large, the speed of the hinge belt 21 can be heightened to increase conveying force.

The chip conveying device 100 in accordance with Embodiment 5 includes the hinge belt 21, the compression mechanism 3, the position sensor 4, and the motor control device 5, which are configured as described above.

According to the configuration, the moving speed of the hinge belt 21 can be controlled to an optimal speed in accordance with a position of the introduction end part 311c. This makes it possible to efficiently convey chips in accordance with the amount of chips.

If the moving speed of the hinge belt 21 is not controlled as described above, it is necessary to run the hinge belt 21 at the high speed for a small amount of chips so that chips can be conveyed when the amount of chips is subsequently increased. If the hinge belt 21 is continued to be run at the high speed, the components that constitute the hinge belt 21 will be abraded more. Therefore, there is a possibility of increasing a frequency of replacing the components and shortening a service life of the chip conveying device 100.

In contrast, by controlling the moving speed of the hinge belt 21 as described above, the conveyance belt is run at the standard normal speed while the amount of chips is small. Therefore, abrasion on components that constitute the hinge belt 21 and abrasion on components that come into contact with those components are reduced. This reduces a frequency of component replacement and extends a service life of the conveying device.

In metal processing, an amount of coolant used in the processing is predetermined. Therefore, as the moving speed of the hinge belt 21 increases, the amount of coolant discharged along with chips increases. In contrast, the chip conveying device 100 in accordance with Embodiment 5 controls the moving speed of the hinge belt 21 as described above. This allows the hinge belt 21 to be run at the normal speed which is lower than the high speed while the amount of chips is small. It is therefore possible to reduce the amount of coolant that is discharged along with chips. As a result, more coolant can be recovered to save coolant. Therefore, it is possible to reduce a running cost of the machine tool M that generates chips.

The position sensor 4 detects whether or not the introduction end part 311c is located at a position level with or higher than the predetermined position. In this case, the position sensor 4 only needs to detect whether or not an arbitrary part of the compression cover 31 is located at a position level with or higher than the predetermined position. However, the position of the introduction end part 311c changes to the greatest extent by rotation of the compression cover 31, and this can increase a difference between the regular position and the predetermined position. This configuration is preferable because detection accuracy by the position sensor 4 can be enhanced.

The position sensor 4 detects whether or not the introduction end part 311c is located at a position level with or higher than the predetermined position. Alternatively, a sensor other than the position sensor 4 can detect whether or not the introduction end part 311c is located at a position level with or higher than the predetermined position. For example, whether or not the introduction end part 311c is at a position level with or higher than the predetermined position can be detected by a sensor that optically detects a distance between the hinge belt 21 and the compression cover 31.

### Embodiment 6

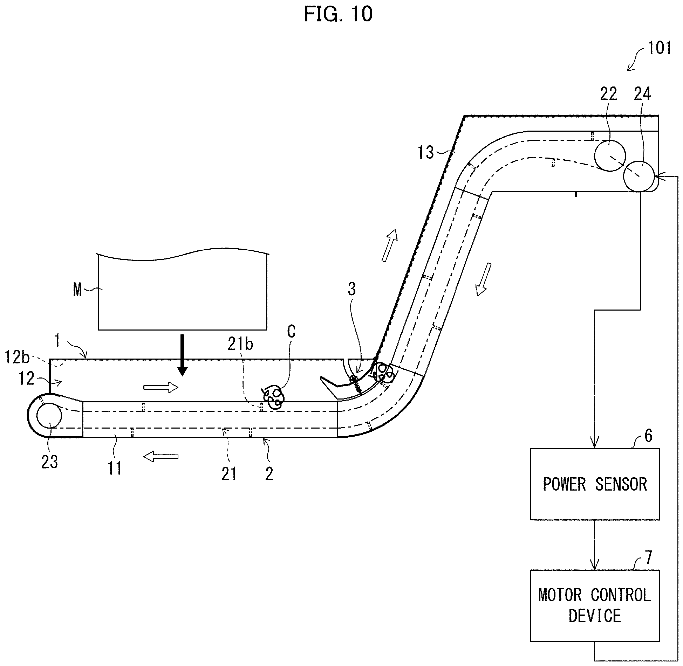

The following description will discuss Embodiment 6 of the present invention with reference to Fig. 10. In Embodiment 6, constituent elements having the same functions as those in Embodiment 1 are denoted by the same reference numerals, and descriptions of such constituent elements are omitted.

Fig. 10 is a side view illustrating a chip conveying device 101 in accordance with Embodiment 6 of the present invention.

As illustrated in Fig. 10, the chip conveying device 101 in accordance with Embodiment 6 includes a power sensor 6 (load sensor) and a motor control device 7 (speed control device). The configuration of the chip conveying device 101 other than the power sensor 6 and the motor control device 7 is the same as that of the chip conveying device 100 (see Fig. 1) in accordance with Embodiment 1.

Note that, although the chip conveying device 100 is provided with the compression mechanism 3, it is possible that the chip conveying device 100 is provided with the foregoing compression mechanism 3A, 3B or 3C instead of the compression mechanism 3.

The power sensor 6 detects electric power that is a load on the driving motor 24.

The motor control device 7 controls a moving speed of a hinge belt 21 by controlling a rotation speed of the driving motor 24 based on an electric power value outputted from the power sensor 6. Specifically, the motor control device 7 controls the moving speed of the hinge belt 21 to the high speed when the electric power value from the power sensor 6 is equal to or higher than a first threshold value. The motor control device 7 also controls the moving speed of the hinge belt 21 to a low speed that is lower than the high speed when the electric power value is lower than the first threshold value.

The motor control device 7 controls the moving speed of the hinge belt 21 to a first low speed when the electric power value is equal to or lower than a second threshold value that is lower than the first threshold value. The motor control device 7 controls the moving speed of the hinge belt 21 to a second low speed that is higher than the first low speed when the electric power value is lower than the first threshold value and higher than the second threshold value. The second low speed corresponds to the normal speed, which is described in Embodiment 4.

Operations of the chip conveying device 101 configured as described above will be described below.

In a case where an amount of chips is large, chips widely push up the compression cover 31. Therefore, pressure is exerted on the hinge belt 21 when the compression mechanism 3 compresses the chips, and therefore the electric power of the driving motor 24 for driving the hinge belt 21 is increased. When the electric power value outputted from the power sensor 6 in this state is equal to or higher than the first threshold value, the motor control device 7 controls the moving speed of the hinge belt 21 to the high speed.

In a case where an amount of chips is small, no pressure is exerted on the hinge belt 21 because the chips do not push up the compression cover 31. When the electric power value from the power sensor 6 in this state is lower than the first threshold value, the motor control device 7 controls the moving speed of the hinge belt 21 to the low speed.

The case where the amount of chips is small includes a case where the amount is considerably small and a case where the amount is slightly small. In the case where (i) the amount of chips is considerably small, (ii) pressure exerted on the hinge belt 21 is very small, and (iii) the electric power value is equal to or lower than the second threshold value, the motor control device 7 controls the moving speed of the conveyance belt to the first low speed. In the case where (i) the amount of chips is slightly small, (ii) pressure exerted on the hinge belt 21 is slightly small, and (ii) the electric power value is lower than the first threshold value and higher than the second threshold value, the motor control device 7 controls the moving speed of the hinge belt 21 to the second low speed.

The chip conveying device 101 in accordance with Embodiment 6 includes the hinge belt 21, the compression mechanism 3, the power sensor 6, and the motor control device 7, which are configured as described above.

According to the configuration, the motor control device 7 controls the moving speed of the hinge belt 21 to any of the three speeds in accordance with the load on the driving motor 24. This makes it possible to still further achieve the foregoing efficient conveyance of chips, less frequent replacement of components, longer service life of the conveying device, and reduction of a running cost of the processing device.

### Embodiment 7

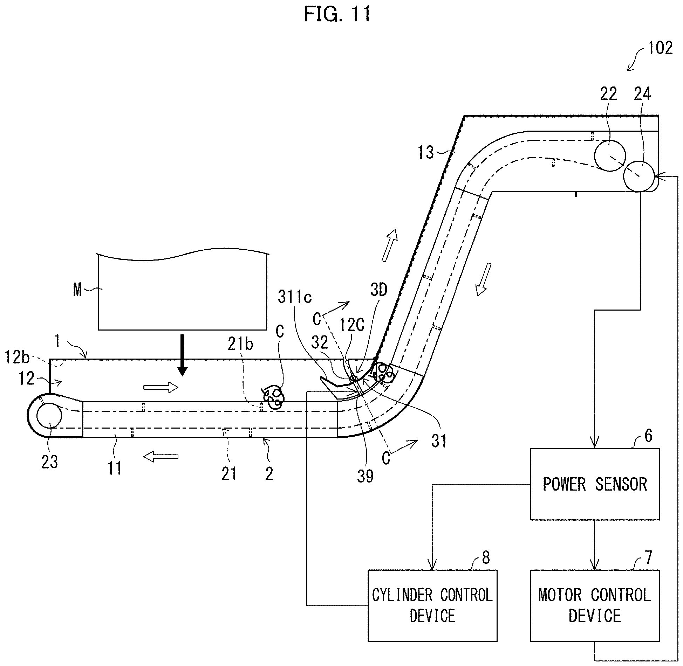

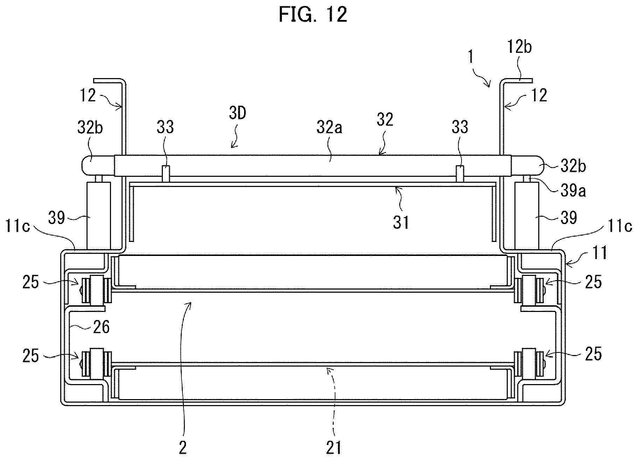

The following description will discuss Embodiment 7 of the present invention with reference to Figs. 11 and 12. In Embodiment 7, constituent elements having the same functions as those in Embodiments 1 and 6 are denoted by the same reference numerals, and descriptions of such constituent elements are omitted.

Fig. 11 is a side view illustrating a chip conveying device 102 in accordance with Embodiment 7. Fig. 12 is a cross-sectional view taken along the line C-C of Fig. 11.

As illustrated in Fig. 11, the chip conveying device 102 in accordance with Embodiment 7 is provided with a compression mechanism 3D and a cylinder control device 8 (opening degree control device). A configuration of the chip conveying device 102 other than the compression mechanism 3D and the cylinder control device 8 is the same as that of the chip conveying device 101 (see Fig. 10) in accordance with Embodiment 5.

The compression mechanism 3D has an electric cylinder 39 (driving mechanism) instead of the extension spring 34 (see Fig. 3) of the compression mechanism 3 in the chip conveying device 100 of Embodiment 1. Except for the electric cylinder 39, the compression mechanism 3D is configured similarly to the compression mechanism 3.

The electric cylinder 39 includes a piston rod 39a as illustrated in Fig. 12, and includes a ball screw, a motor, and the like (not illustrated). The electric cylinder 39 causes the piston rod 39a to reciprocate by converting rotational driving force of the motor into linear motion by the ball screw. A lower end of the electric cylinder 39 is fixed to an upper part 11c of a conveyor case 11. An upper end of the piston rod 39a is fixed to an end part 32b of a bar 32.

The cylinder control device 8 controls a movement amount of the piston rod of the electric cylinder 39 based on the electric power value outputted from the power sensor 6, and thus controls an opening degree of an introduction end part 311c with respect to a hinge belt 21. Specifically, the cylinder control device 8 controls the electric cylinder 39 so that the opening degree at which the introduction end part 311c opens with respect to the hinge belt 21 becomes a large opening degree when the electric power value from the power sensor 6 is equal to or higher than the foregoing first threshold value. When the electric power value is lower than the first threshold value, the cylinder control device 8 controls the electric cylinder 39 so that the opening degree of the introduction end part 311c becomes a small opening degree that is smaller than the large opening degree.

When the electric power value is equal to or lower than the second threshold value, the cylinder control device 8 controls the electric cylinder 39 so that the opening degree of the introduction end part 311c becomes a first small opening degree. When the electric power value is higher than the first threshold value and lower than the second threshold value, the cylinder control device 8 controls the electric cylinder 39 so that the opening degree of the introduction end part 311c becomes a second small opening degree that is greater than the second small opening degree. The second small opening degree is a standard opening degree.

Operations of the chip conveying device 102 configured as described above will be described below.

As described in Embodiment 6, in a case where the amount of chips is large, pressure is exerted on the hinge belt 21, and therefore the electric power of the driving motor 24 for driving the hinge belt 21 is increased. When the electric power value outputted from the power sensor 6 in this state is equal to or higher than the first threshold value, the motor control device 7 controls the moving speed of the hinge belt 21 to the high speed, and the cylinder control device 8 controls the electric cylinder 39 so that the opening degree of the introduction end part 311c becomes the large opening degree.

In a case where the amount of chips is small, no pressure is exerted on the hinge belt 21 because the chips do not push up the compression cover 31. When the electric power value from the power sensor 6 in this state is lower than the first threshold value, the motor control device 7 controls the moving speed of the hinge belt 21 to the low speed, and the cylinder control device 8 controls the electric cylinder 39 so that the opening degree of the introduction end part 311c becomes the small opening degree.

In a case where (i) the amount of chips is considerably small as described in Embodiment 6, (ii) pressure exerted on the hinge belt 21 is very small, and (iii) the electric power value is equal to or lower than the second threshold value, the motor control device 7 controls the moving speed of the conveyance belt to the first low speed. In this case, the cylinder control device 8 controls the electric cylinder 39 so that the opening degree of the introduction end part 311c becomes a first small opening degree.

In a case where (i) the amount of chips is slightly small as described in Embodiment 6, (ii) pressure exerted on the hinge belt 21 is slightly small, and (iii) the electric power value is lower than the first threshold value and higher than the second threshold value, the motor control device 7 controls the moving speed of the hinge belt 21 to the second low speed. In this case, the cylinder control device 8 controls the electric cylinder 39 so that the opening degree of the introduction end part 311c becomes a second small opening degree.

The chip conveying device 102 in accordance with Embodiment 6 includes the hinge belt 21, the compression mechanism 3D, the power sensor 6, the motor control device 7, and the cylinder control device 8, which are configured as described above.

In the above configuration, the opening degree of the introduction end part 311c is controlled in accordance with a load on the driving motor 24. This allows the opening degree of the introduction end part 311c to be narrower than a normal opening degree to compress chips in a state in which a load on the driving motor 24 is small. When chips roll in the inclined part 212, the chips agglomerate to form larger clusters. In contrast, by compressing chips to some extent even when the amount of the chips is small, it is possible to cause the chips to hardly roll in the inclined part 212. Moreover, when the load on the driving motor 24 is large, the opening degree of the introduction end part 311c is set to be larger, and this makes it possible to introduce and compress a large amount of chips.

Furthermore, the motor control device 7 controls the moving speed of the hinge belt 21 to any of the three speeds in accordance with the load on the driving motor 24. As described also in Embodiment 6, this makes it possible to still further achieve the efficient conveyance of chips, less frequent replacement of components, longer service life of the chip conveying device 102, and reduction of a running cost of the machine tool M.

### [Example of Configuration Achieved by Software]

The control block of the chip conveying device 100, 101, or 102 (in particular, the motor control device 5 or 7 or the cylinder control device 8) can be realized by a logic circuit (hardware) provided in an integrated circuit (IC chip) or the like. Alternatively, the control block can be realized by software.

In the latter case, the chip conveying device 100, 101, or 102 includes a computer that executes instructions of a program that is software realizing the foregoing functions. The computer includes, for example, at least one processor and a computer-readable storage medium storing the program.

In a case where the processor in the computer reads out the program from the storage medium and executes the program, the object of the present invention is achieved. The processor can be, for example, a central processing unit (CPU). The storage medium can be a "non-transitory tangible medium" such as, for example, a tape, a disk, a card, a semiconductor memory, a programmable logic circuit, or the like, as well as a read only memory (ROM) or the like. The computer can further include a random access memory (RAM) in which the program is loaded.

The program can be made available to the computer via any transmission medium (such as a communication network or a broadcast wave) that can transmit the program. Note that an aspect of the present invention can also be achieved in the form of a computer data signal in which the program is embodied via electronic transmission and which is embedded in a carrier wave.

### [Additional Remarks]

The present invention is not limited to the embodiments, but can be altered variously by a skilled person in the art within the scope of the claims. The present invention also encompasses, in its technical scope, any embodiment derived by appropriately combining technical means disclosed in differing embodiments.

### Reference Signs List

- 3, 3A, 3B, 3C, 3D:: Compression mechanism (compressor)
- 4:: Position sensor
- 5:: Motor control device (control device)
- 6:: Power sensor (load sensor)
- 7:: Motor control device (speed control device)
- 8:: Cylinder control device (opening degree control device)
- 12a:: Lateral wall
- 21:: Hinge belt (conveyance belt)
- 24:: Driving motor (driving device)
- 31:: Compression cover (compression panel)
- 34:: Extension spring (elastic body)
- 35A:: Leaf spring (elastic body)
- 36:: Compression spring (elastic body)
- 39:: Electric cylinder (driving mechanism)
- 100:: Chip conveying device
- 211:: Receiving part
- 212:: Inclined part
- 213:: Discharging part
- 214:: Boundary region
- 311b:: Compression surface

## Claims

1. A conveying device, comprising:
a conveyance belt which is provided so as to form a receiving part that receives chips, an inclined part that is inclined with respect to the receiving part and that elevates the chips received by the receiving part, and a discharging part that discharges the chips thus elevated; and
a compressor which has a compression surface that faces the conveyance belt in a boundary region between the receiving part and the inclined part and has an introduction end part that introduces the chips from the receiving part to the compression surface, a distance between the introduction end part and the conveyance belt being variable so that the chips between the compression surface and the conveyance belt are compressed.

2. The conveying device as set forth in claim 1, wherein the compressor includes a compression panel and an elastic body,
the compression panel having the introduction end part and the compression surface, the compression panel being supported by a pivot that is provided on a downstream side of the introduction end part in a direction, in which the chips are conveyed, so that the introduction end part is rotatable, and the compression panel compressing the chips, and
the elastic body exerting, on the compression panel, force so as to bring the introduction end part closer to the conveyance belt against pushing-up force of the chips to push up the compression panel.

3. The conveying device as set forth in claim 2, wherein the elastic body is an extension spring for exerting, on the compression panel, restorative force that has been generated by extension in response to the pushing-up force of the chips to push up the compression panel.

4. The conveying device as set forth in claim 2, wherein the elastic body is a compression spring for exerting, on the compression panel, restorative force that has been generated by compression in response to the pushing-up force of the chips to push up the compression panel.

5. The conveying device as set forth in claim 2, wherein the elastic body is a leaf spring which supports the compression panel so that the introduction end part is rotatable, the leaf spring exerting, on the compression panel, restorative force that has been generated by deformation in response to the pushing-up force of the chips to push up the compression panel.

6. The conveying device as set forth in claim 1, wherein the compressor includes a compression panel and a weight,
the compression panel having the introduction end part and the compression surface, the compression panel being supported by a pivot that is provided on a downstream side of the introduction end part in a direction, in which the chips are conveyed, so that the introduction end part is rotatable, and the compression panel compressing the chips, and
the weight being provided on the compression panel.

7. The conveying device as set forth in any one of claims 2 through 6, further comprising:
a sensor for detecting that the compression panel is at a position which is level with or higher than a predetermined position, the predetermined position being higher than a regular position at which an opening angle of the introduction end part with respect to the conveyance belt is minimized; and
a control device,
the control device, when the compression panel has not been detected to be at a position level with or higher than the predetermined position, controlling a moving speed of the conveyance belt to be a normal speed and,
the control device, when the compression panel has been detected to be at the predetermined position, controlling the moving speed of the conveyance belt to be a high speed which is higher than the normal speed.

8. The conveying device as set forth in any one of claims 1 through 6, further comprising:
a driving device which drives the conveyance belt;
a load sensor which detects a load on the driving device; and
a control device,
the control device, when the load which has been detected is a first threshold value or higher, controlling a moving speed of the conveyance belt to be a high speed and,
the control device, when the load which has been detected is lower than the first threshold value, controlling the moving speed to be a low speed which is lower than the high speed.

9. The conveying device as set forth in claim 8, wherein:
when the load which has been detected is not higher than a second threshold value that is lower than the first threshold value, the control device controls the moving speed to be a first low speed; and
when the load which has been detected is lower than the first threshold value and higher than the second threshold value, the control device controls the moving speed to be a second low speed that is higher than the first low speed.

10. The conveying device as set forth in claim 1, further comprising:
a driving device which drives the conveyance belt;
a load sensor which detects a load on the driving device; and
a speed control device,
the speed control device, when the load which has been detected is a first threshold value or higher, controlling a moving speed of the conveyance belt to be a high speed,
the speed control device, when the load which has been detected is lower than the first threshold value, controlling the moving speed to be a low speed which is lower than the high speed,
the compressor including a compression panel and a driving mechanism,
the compression panel having the introduction end part and the compression surface, the compression panel being supported by a pivot that is provided on a downstream side of the introduction end part in a direction, in which the chips are conveyed, so that the introduction end part is rotatable, and the compression panel compressing the chips, and
the driving mechanism driving the compression panel so that a distance between the introduction end part and the conveyance belt is varied,
said conveying device further comprising:
an opening degree control device,
the opening degree control device, when the load which has been detected is the first threshold value or higher, controlling the driving mechanism so that an opening degree at which the introduction end part opens with respect to the conveyance belt becomes a large opening degree and,
the opening degree control device, when the load which has been detected is lower than the first threshold value, controlling the driving mechanism so that the opening degree becomes a small opening degree that is smaller than the large opening degree.

11. The conveying device as set forth in claim 10, wherein:
when the load which has been detected is not higher than a second threshold value that is lower than the first threshold value, the speed control device controls the moving speed of the conveyance belt to be a first low speed;
when the load which has been detected is lower than the first threshold value and higher than the second threshold value, the speed control device controls the moving speed to be a second low speed that is higher than the first low speed;
when the load which has been detected is not higher than the second threshold value, the opening degree control device controls the opening degree to be a first small opening degree; and
when the load which has been detected is lower than the first threshold value and higher than the second threshold value, the opening degree control device controls the opening degree to be a second small opening degree that is greater than the first small opening degree.

12. The conveying device as set forth in any one of claims 2 through 11, wherein:
the boundary region is formed into a curved shape;
the introduction end part is formed so as to be warped upward; and
the compression surface is formed into a curved shape that is along the curved shape of the boundary region.
